(19) Europäisches Patentamt
European Patent Office
Office européen des brevets

(11) EP 1 580 463 A2

(12) **EUROPEAN PATENT APPLICATION**

(43) Date of publication:
28.09.2005 Bulletin 2005/39

(51) Int Cl.⁷: **F16H 59/14**

(21) Application number: 05004469.2

(22) Date of filing: 01.03.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: 24.03.2004 JP 2004087586

(71) Applicant: **Toyota Jidosha Kabushiki Kaisha Toyota-shi, Aichi-ken 471-8571 (JP)**

(72) Inventors:
• **Suzuki, Toshihiro**
  **Toyota-shi Aichi-ken, 471-8571 (JP)**
• **Ohba, Mitsuru**
  **Toyota-shi Aichi-ken, 471-8571 (JP)**

(74) Representative: **Kuhnen & Wacker Patent- und Rechtsanwaltsbüro Prinz-Ludwig-Strasse 40A 85354 Freising (DE)**

(54) **System and method for detecting torque transmitted by a clutch in a vehicle**

(57) A transmitted torque detection system calculates an output torque (te) and an inertial loss torque (tl) of a driving power source (12), and calculates the torque (tc) transmitted by a clutch (14) based on the output torque (te) and the inertial loss torque (tl) when the clutch (14) is partially engaged.

F I G . 5

**Description**

BACKGROUND OF THE INVENTION

1. Field of the Invention

The invention relates to a system and method for detecting torque transmitted by a clutch in a vehicle, and more particularly the invention relates to such transmitted torque detection system and method that enable detecting the torque transmitted by the clutch more accurately during the clutch being partially engaged.

2. Description of the Related Art

A known electromagnetic clutch device is provided in a vehicle along a propeller shaft in series, which switches the driving mode of the vehicle between a four-wheel driving mode in which all of the four wheels are driven and a two-wheel driving mode in which only two of them are driven. Also, another similar electromagnetic clutch device is known which controls the distribution ratio of power provided to the front and rear wheels during a four-wheel driving mode. Typically, the operation of such an electromagnetic clutch device that allows the driving power generated from a driving power source (e.g., engine) to be transmitted to a selected one or more of the wheels is controlled based on particular information derived from the output of various sensors provided in the vehicle. For example, Japanese Laid-opened Patent Application JP-4-46830 recites a torque distribution system that includes a manual transmission and a clutch that is provided along a power transmission path between the manual transmission and a driving power source and is operated by a driver to allow or interrupt toque transmission from the power source to the manual transmission. According to this torque distribution system, a target value of torque distributed via the torque distribution system is determined based on the torque actually transmitted through the clutch.

This torque distribution system however involves a problem that the accuracy in detecting the torque transmitted by the clutch when the clutch is partially engaged, i.e., the clutch is slipping, may become insufficient and such inaccurately detected clutch transmitting torque may result in inappropriate torque distribution by the torque distribution system. Thus, it has been desired to provide a torque detecting system that is capable of accurately detecting the torque transmitted by a clutch in a vehicle when the clutch is partially engaged, i.e., when the clutch is slipping.

SUMMARY OF THE INVENTION

In view of the foregoing problem, it is an object of the invention to provide transmitted torque detection system and method which accurately detect a torque transmitted by a clutch provided in a vehicle when the clutch is partially engaged.

To accomplish the aforementioned object, a first aspect of the invention relates to a transmitted torque detection system for a vehicle including a driving power source, a transmission, and a clutch that is provided along a driving power transmission path between the driving power source and the transmission and is manually or automatically operated to allow or interrupt torque transmission from the driving power source to the transmission. The transmitted torque detection system includes (a) output torque calculating means for calculating an output torque of the driving power source; (b) inertial loss torque calculating means for calculating an inertial loss torque of the driving power source; (c) partial clutch engagement detecting means for determining whether the clutch is partially engaged; and (d) clutch transmitting torque detecting means for calculating a torque transmitted by the clutch based on the output torque calculated by the output torque calculating means and the inertial loss torque calculated by the internal loss torque calculating means when the clutch partial engagement detecting means determines that the clutch is partially engaged.

Thus, this transmitted torque detection system factors in the inertial loss torque when calculating the torque transmitted by the clutch, which enables to accurately detect the torque transmitted by the clutch regardless of the engagement state thereof. Namely, it is possible to accurately detect the torque transmitted by the clutch even when the clutch is partially engaged.

In the above-described transmitted torque detection system, it is preferable that the clutch transmitting torque detecting means calculate a difference between the output torque calculated by the output torque calculating means and the inertial loss torque calculated by the internal loss torque calculating means as the torque transmitted by the clutch when the clutch partial engagement detecting means determines that the clutch is partially engaged. In this case, the accuracy in calculating the torque transmitted by the clutch will be further improved and the ease of implementing the invention will be increased.

A second aspect of the invention relates to a transmitted torque detection method for detecting a torque transmitted by a clutch provided along a driving power transmission path between a driving power source and a transmission in a vehicle. The method includes (a) calculating an output torque of the driving power source; (b) calculating an inertial loss torque of the driving power source; (c) determining whether the clutch is partially engaged; and (d) calculating the torque transmitted by the clutch based on the calculated output torque and the calculated inertial loss torque when the clutch is partially engaged.

BRIEF DESCRIPTION OF THE DRAWINGS

The foregoing and/or further objects, features and advantages of the invention will become more apparent from the following description of preferred embodiment with reference to the accompanying drawings, in which like numerals are used to represent like elements and wherein:

FIG. 1 is a view schematically showing the configuration of a torque distribution system according one exemplary embodiment of the invention which is incorporated in a four-wheel-drive vehicle having a four-wheel drive structure constructed from a FF (Front-engine Front-drive) vehicle structure;
FIG. 2 is a view illustrating the configuration of a clutch and a clutch pedal that is provided in a passenger compartment and is operated by a driver to control the clutch;
FIG. 3 is a cross sectional view showing the construction of a coupling;
FIG. 4 is a graph illustrating a relationship between the current supplied to the coupling and the torque transmitted by the coupling;
FIG. 5 is a view showing functional portions of a 4WD ECU that are used to detect the torque transmitted by the clutch;
FIG. 6 is a view illustrating a relationship between an input/output torque of the clutch and an inertial loss torque of the engine when the clutch is partially engaged;
FIG. 7 is a time chart illustrating a typical state in which the engine speed detected by an engine speed sensor, the engine torque calculated by an output torque calculating portion, and clutch transmitting torque calculated by a clutch transmitting torque calculating portion change with time;
FIG. 8 is a graph indicating the clutch transmitting torque (estimated value) calculated by the clutch transmitting torque calculating portion and the torque actually transmitted through the clutch; and
FIG. 9 is a flowchart showing a four-wheel drive control routine which is repeatedly executed by the 4WD ECU every time period of from several msec to several tens of msec.

DETAILED DESCRIPTION OF THE PREFERRED EMBODIMENTS

An exemplary embodiment of the invention will be described with reference to the accompanying drawings.

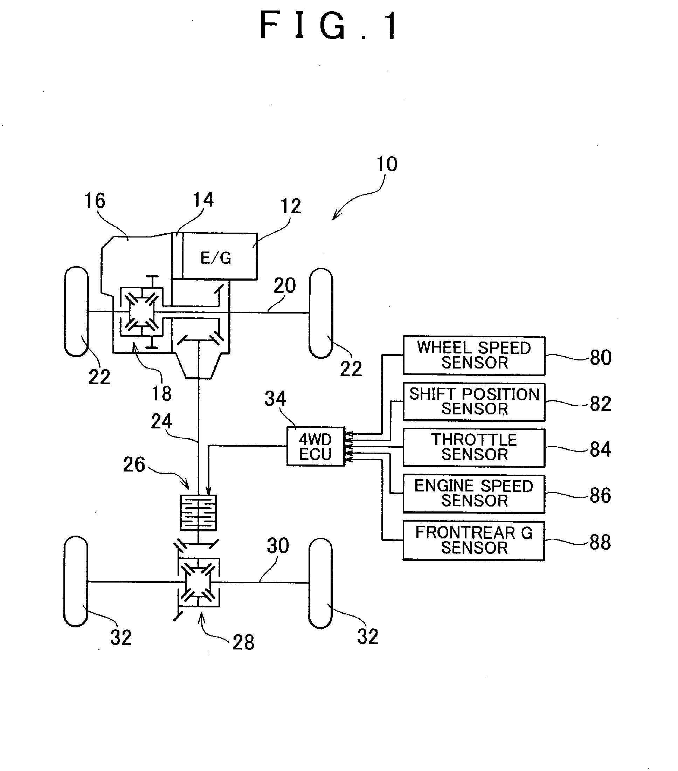

FIG. 1 is a view schematically showing the configuration of a torque distribution system 10 according one exemplary embodiment of the invention which is incorporated in a four-wheel-drive vehicle having a four-wheel drive structure constructed from a FF (Front-engine Front-drive) vehicle structure. According to this embodiment, the torque generated by an engine 12 is transferred to a pair of front wheels 22 via a clutch 14, a transmission 16, a front-wheel differential gear unit 18, and a front axle 20, and to a pair of rear wheels 32 via a propeller shaft 24 serving as a power transmission shaft, an electromagnetic coupling 26, a rear-wheel differential gear unit 28, and a rear axle 39. A 4WD ECU 34 controls the operation of the electromagnetic coupling 26. Thus, the torque distribution system 10 is constructed as an electronically controlled torque split type power train system for four-wheel drive vehicles, which distributes the torque generated by the engine 12 to the front wheels 22 and the rear wheels 32 in accordance with the running state of the vehicle.
The engine 12 is an internal combustion engine including, but not limited to, a gasoline engine and a diesel engine, which produces driving power through combustion of fuel supplied into each cylinder thereof. The transmission 16 is, for example, a synchronously engaged type manual transmission that is manually operated by a driver to change its speed (transmission speed), namely, to increase or decrease the speed of rotation input from the engine 12 at a transmission ratio y. According to this transmission, more specifically, when a shift lever provided in the passenger compartment of the vehicle is operated by the driver, a selected one or more of a plurality of engaging devices is engaged or disengaged to establish a particular speed among four forward speeds and a reverse speed, or place the transmission in a neutral state. The transmission ratio y changes according to the transmission speed established . The input shaft of the transmission 16 and an output shaft 38 of the clutch 14 have splined portions and coupled with each other via those portions.

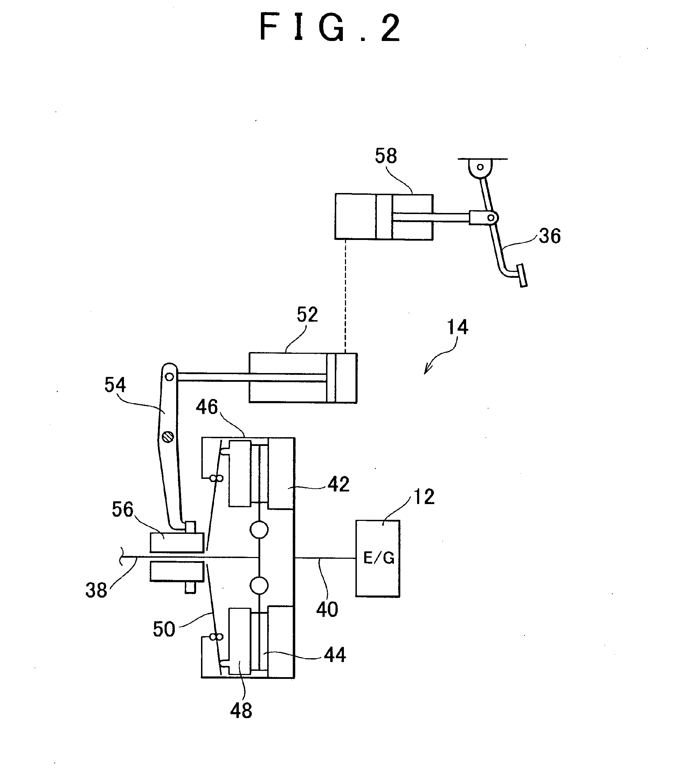

FIG. 2 is a view illustrating the configuration of the clutch 14 and a clutch pedal 36 that is provided in the passenger compartment and operated by the driver to control the clutch 14. The clutch 14 includes a flywheel 42 connected to a crank shaft 40 of the engine 12, a clutch disk 44, a pressure plate 48 housed in a clutch housing 46, diaphragm springs 50 that urge the pressure plate 48 towards the flywheel 42 side to sandwich the clutch disk 44 between the pressure plate 48 and the flywheel 42, i.e., to engage the clutch 14, a release sleeve 56. In operation, the release sleeve 56 is displaced to the right side in FIG. 2 by a clutch release cylinder 52 via a release fork 54 to move the internal end of each diaphragm spring 50 in the right side in FIG. 2 so that the clutch 14 is released (disengaged). A clutch master cylinder 58 that is activated according to the operation of the clutch pedal 36 by the driver is connected to the clutch release cylinder 52.

Having the foregoing construction, the clutch 14 remains engaged while the clutch pedal 36 is not operated by the driver, and the clutch 14 is disengaged or made to slip as the clutch pedal 36 is operated by the driver. The torque from the engine 12 is fully transmitted to the transmission 16 during the clutch 14 being engaged, and the torque transmission between the engine 12 and the transmission 16 is interrupted during the clutch 14 being disengaged. When the clutch 14 is partially engaged (i.e., slipping), the torque is partially transmitted to the transmission 16.

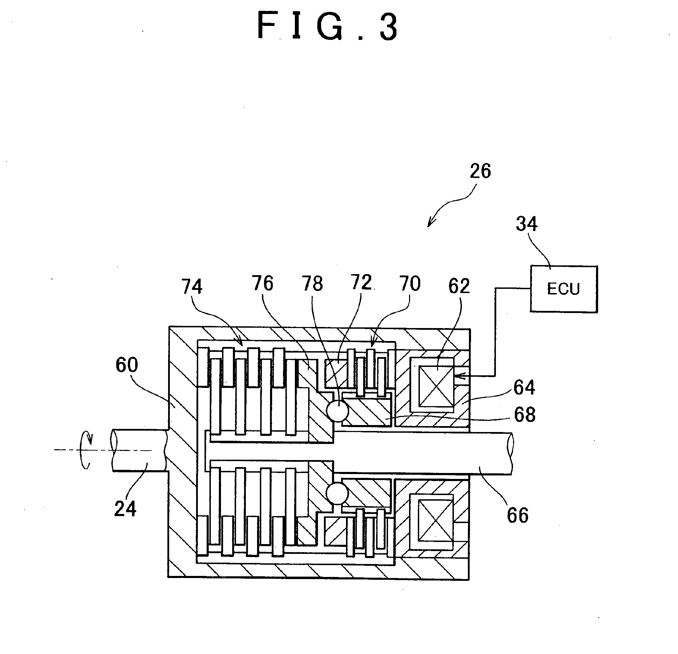

FIG. 3 is a cross sectional view showing the construction of the electromagnetic coupling 26. The electromagnetic coupling 26 includes (a) a first housing 60 that is integrally formed on the propeller shaft 24 so as to be concentric therewith, (b) a second housing 64 that is fixed along the inner periphery of the first housing 60 and includes an electromagnetic solenoid 62, (c) an output shaft 66 that is provided concentric with the first housing 60 and rotatable about the axis of the first housing 60, (d) a control cam 68 that is provided concentric with the output shaft 66 and rotatable about the axis of the output shaft 66, (e) a control clutch 70 that interrupts relative rotation between the first housing 60 and the control cam 68 or makes them slip, (f) an armature 72 that is a loop-shaped iron part provided concentric with the output shaft 66 and movable along the axial direction of the output shaft 66, which in operation is moved so that a clutch plate of the control clutch 70 is sandwiched between the armature 72 and the second housing 64, (g) a main clutch 74 that interrupts relative rotation between the first housing 60 and the output shaft 66 or makes them slip, and (h) a main cam 76 that is provided concentric with the output shaft 66, but not rotatable about its axis, and is movable on the output shaft 66 along the axial direction thereof. In operation, the main cam 76 is moved so that clutch plates of the main clutch 74 are sandwiched between the main cam 76 and the first housing 60. A plurality of concave portions is formed on opposite surfaces of the control cam 68 and balls 78 are provided between those surfaces and fit to the concave portions.

According to the electromagnetic coupling 26 having the foregoing structure, when the electromagnetic solenoid 62 is not energized, the control clutch 70 and the main clutch 74 are both in a disengaged state and therefore no driving power is transmitted from the propeller shaft 24 to the output shaft 66. Meanwhile, when the electromagnetic solenoid 62 is energized, magnetic flux is generated around the electromagnetic solenoid 62 which attracts the armature 72 towards the second housing 64 side, whereby the control clutch 70 is engaged or made to slip. When the control clutch 70 is engaged, it causes a difference in rotation speed between the control cam 68 and the main cam 76, so that each ball 78 is pressed by a slant portion of each concave portion formed on the control cam 68 against the main cam 76 side, and consequently the main cam 76 is pressed against the propeller shaft 24 side, thereby engaging the main clutch 74 and allowing driving power to be transmitted from the propeller shaft 24 to the output shaft 66.

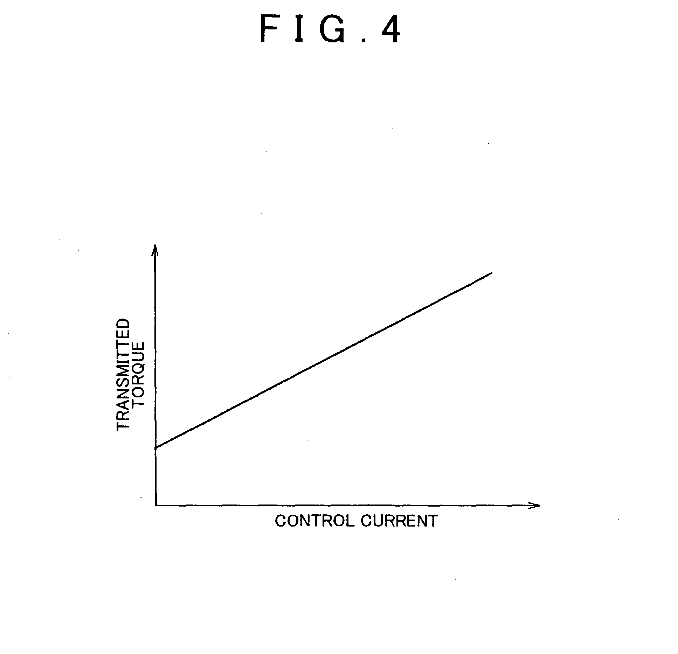

Accordingly, the torque transmitted through the electromagnetic coupling 26 having the foregoing structure changes in proportion to the control current supplied to the electromagnetic solenoid 62, as illustrated in FIG. 4. More specifically, when the electromagnetic solenoid 62 is supplied with small current, the force with which the armature 72 is attracted towards the second housing 64 side becomes small, whereby the engaging force of the control clutch 70 becomes small accordingly. As a result, the rotation speed difference between the control cam 68 and the main cam 76 reduces, and therefore the force with which the main cam 76 is pressed against the propeller shaft 24 side reduces accordingly, which results in only small torque being transmitted through the electromagnetic coupling 26. On the other hand, when the electromagnetic solenoid 62 is supplied with large current, the force with which the armature 72 is attracted towards the second housing 64 side becomes large, whereby the engaging force of the control clutch 70 becomes large accordingly. As a result, the rotation speed difference between the control cam 68 and the main cam 76 increases, and therefore, the force with which the main cam 76 is pressed against the propeller shaft 24 side increases accordingly, which results in large torque being transmitted through the electromagnetic coupling 26. Moreover, when the control current to the electromagnetic solenoid 62 exceeds a particular level, the engine torque starts to be transmitted to the front wheels 22 and the rear wheels 32 as if all the wheels are directly connected to the engine 12. According to this embodiment, the ratio of the engine torque transmitted to the rear wheels 32 to the total engine torque is adjusted within the range between 0 to 0. 5 by controlling the current supplied to the electromagnetic solenoid 62.

Meanwhile, the 4WD ECU 34 is a micro computer device which includes a CPU (Central Processing Unit), a ROM (Read Only Memory), a RAM (Random Access Memory), an input port, and an output port. The 4WD ECU 34 executes programs prestored in the ROM using various signals. For example, the 4WD ECU 34 executes a coupling transmitting torque control in which the 4WD ECU 34 determines the control current for the electromagnetic solenoid 62 such that desired torque is transmitted through the electromagnetic coupling 26. Also, the 4WD ECU 34 executes a clutch transmitting torque determining control in which the 4WD ECU 34 determines (estimates) the torque transmitted through the clutch 14 which will be used to determine the control current for the electromagnetic solenoid 62. The torque distribution system 10 is provided with a wheel speed sensor 80 that detects the actual rotation speed of the rear wheels 32 which corresponds to the vehicle speed, a throttle sensor 84 that detects the opening of a throttle valve provided in an intake passage of the engine 12, not shown, an engine speed sensor 86 that detects the engine speed of the engine 12, and a front-rear G sensor 88. From these sensors, the 4WD ECU 34 receives signals indicating vehicle speed v, shift position sp, throttle opening th, engine speed ne, front-rear acceleration g, and so on.

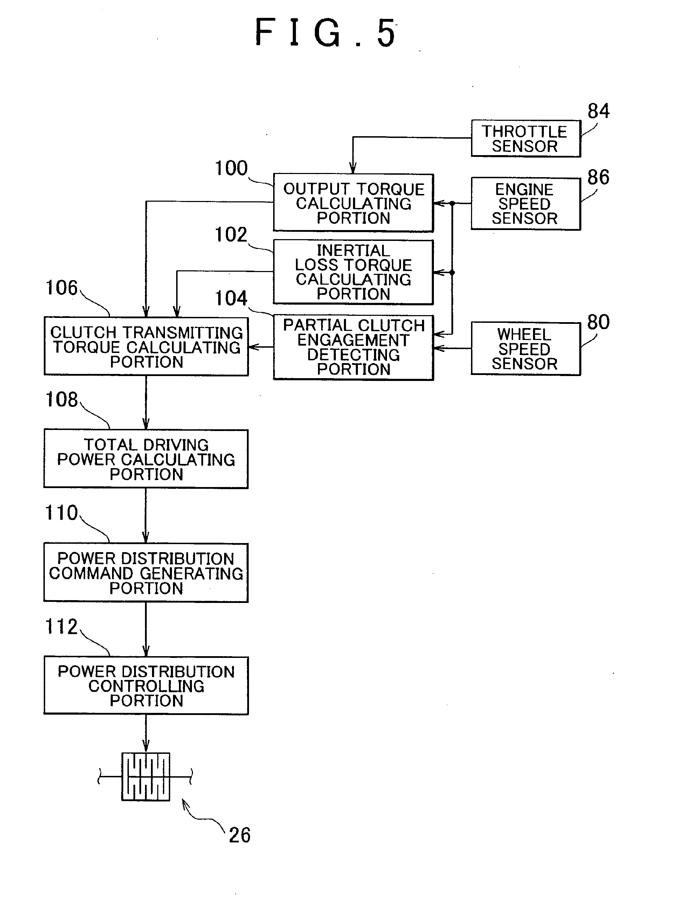

FIG. 5 shows functional portions of the 4WD ECU 34 that are used to detect the torque transmitted through the clutch 14. Among them, an output torque calculating portion 100 is used to calculate output torque te indicating torque output from the engine 12 as a driving power source. The output torque te may be obtained by, for example, applying the throttle opening th detected by the throttle sensor 84 and the engine speed ne detected by the engine speed sensor 86 to a predetermined relationship.

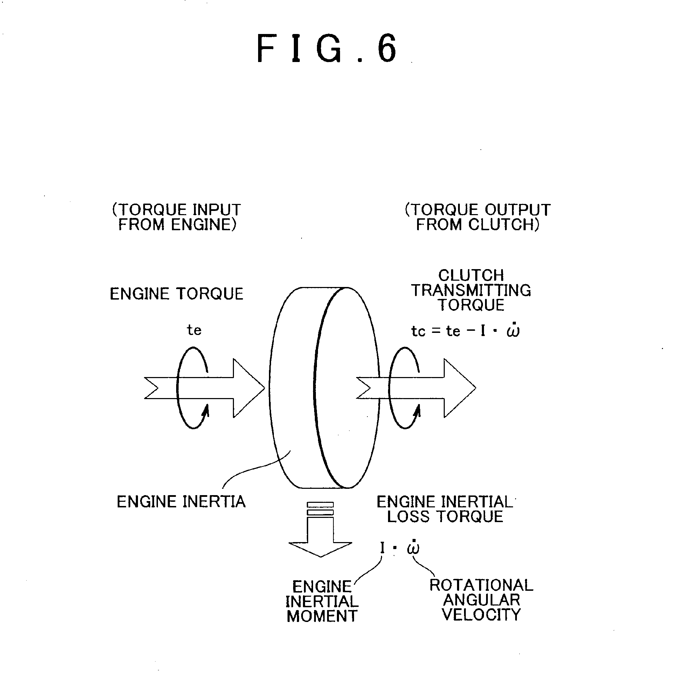

An inertial loss torque calculating portion 102 is used to calculate inertial loss torque tl indicating a loss of inertial torque of the engine 12. For example, the inertial loss torque tl may be obtained by applying the engine speed ne detected by the engine speed sensor 86 to a predetermined relationship. FIG. 6 illustrates one typical relationship between the input/output torque of the clutch 14 and the inertial loss torque of the engine 12 when the clutch 14 is partially engaged. Referring to FIG. 6, when the engine torque te is input from the engine 12 to the clutch 14 via the crank shaft 40, a portion of the engine torque te is used to compensate for the inertial loss torque tl (i.e., the torque that is lost as the inertial rotation of engine components, such as the crank shaft 40 and the flywheel 42, slows down). For example, the inertial loss torque tl may be obtained as a product of an engine-component moment I that is specific to each engine having a particular design and an engine angular velocity dω/dt. Note that the dot in the expression in FIG. 6 represents a time differential. In this embodiment, the inertial loss torque calculating portion 102 obtains the inertial loss torque tl of the engine 12 by applying the engine component inertial moment I and the engine and engine angular speed dω/dt to a relationship (1) indicated below:

$$t1 = I \times (d\omega/dt) \tag{1}$$

A partial clutch engagement detecting portion 104 is used to determine whether the clutch 14 is partially engaged (i.e., slipping). More specifically, the partial clutch engagement detecting portion 104 determines whether the clutch 14 is released, partially engaged, or fully engaged, by applying the vehicle speed v detected by the second housing 64 and the engine speed ne detected by the engine speed sensor 86 to a predetermined relationship.

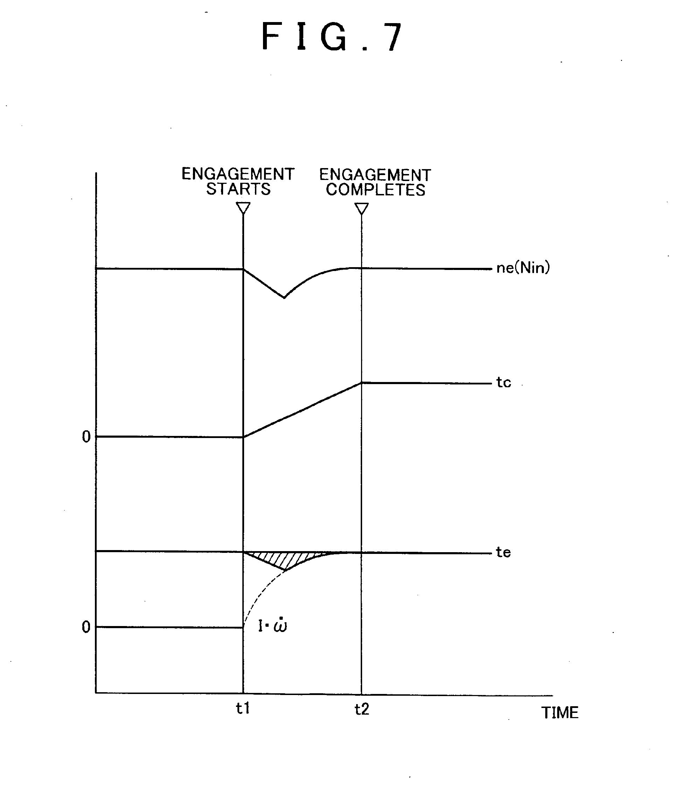

FIG. 7 is a time chart illustrating one typical state in which the engine speed ne detected by the engine speed sensor 86, the engine torque te calculated by the output torque calculating portion 100, and the clutch transmitting torque tc calculated by a clutch transmitting torque calculating portion 106, as will be described later, change with time. Referring to FIG. 7, when the clutch 14 is released, the torque te output from the engine 12 is not transmitted through the clutch 14, and therefore the clutch transmitting torque tc is zero. When the clutch 14 starts to be engaged at time tl, it causes a portion of the engine torque te from the engine 12 to be consumed to compensate for the inertial loss torque tl, so the engine torque te and the engine speed ne decrease accordingly. In the time chart of FIG. 7, the hatched area of the engine torque te represents the portion of the engine torque te that is consumed to compensate for the inertial loss torque t1, and the clutch transmitting torque tc is determined by subtracting the inertial loss torque tl from the engine torque te. When the clutch 14 is fully engaged at time t2, the engine torque te from the engine 12 is fully transmitted as the clutch transmitting torque tc.

The clutch transmitting torque calculating portion 106 calculates the engine torque te transmitted through the clutch 14 by applying the engaging state of the clutch 14 determined by the partial clutch engagement detecting portion 104 to a relationship as shown in FIG. 7. Specifically, when the partial clutch engagement detecting portion 104 determines that the clutch 14 is partially engaged, the clutch transmitting torque tc is obtained by applying the engine torque te calculated by the output torque calculating portion 100 and the inertial loss torque tl calculated by 102 to a relationship (2) shown below:

$$tc = te - tl$$
$$= te - I \times (d\omega/dt) \cdots (2)$$

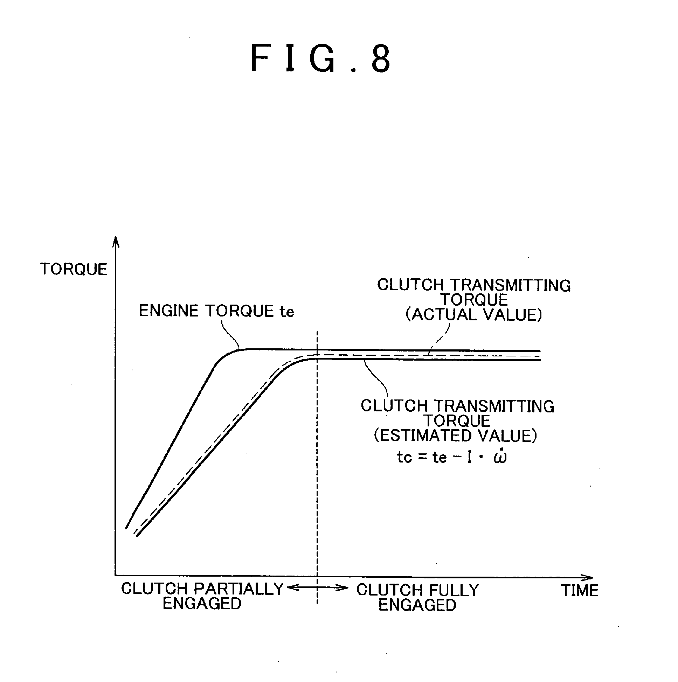

Here, the clutch transmitting torque tc is obtained by subtracting the inertial loss torque tl from the engine torque te. When the partial clutch engagement detecting portion 104 determines that the clutch 14 is fully engaged, the clutch transmitting torque tc is determined as being eqlual to the engine torque te calculated by the output torque calculating portion 100. FIG. 8 is a graph indicating the clutch transmitting torque tc (estimated value) calculated by the clutch transmitting torque calculating portion 106 and the torque actually transmitted through the clutch 14. As evident from this graph, the clutch transmitting torque tc calculated by the clutch transmitting torque calculating portion 106 is very close to the actual value.

A total driving power calculating portion 108 is used to calculate total driving power tin indicating the total driving power transmitted from the propeller shaft 24. For example, a theoretical value of the total driving power tin may be obtained by applying a total gear ratio itotal and the clutch transmitting torque tc calculated by the clutch transmitting torque calculating portion 106 to a relationship (3) shown below:

$$\text{tin} = \text{tc} \times \text{itotal} \tag{3}$$

A power distribution command generating portion 110 is used to calculate a driving power distribution value tout representing target torque to be transmitted via the electromagnetic coupling 26. For example, the driving power distribution value tout may be obtained by applying a torque distribution ratio KST and the total driving power tin calculated by the total driving power calculating portion 108 to a relationship (4) shown below:

$$\text{tout} = \text{KST} \times \text{tin} \tag{4}$$

A power distribution control portion 112 adjusts the torque to be transmitted though the electromagnetic coupling 26 by controlling the control current for the electromagnetic solenoid 62 according to the driving power distribution value tout calculated by the power distribution command generating portion 110.

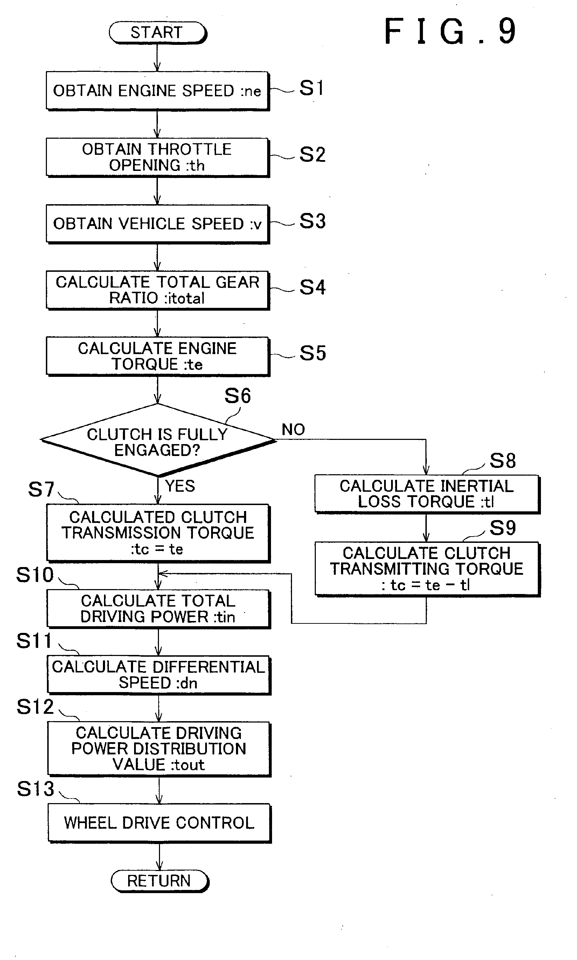

FIG. 9 shows one exemplary four-wheel drive control routine which is repeatedly executed by the 4WD ECU 34 every time period of from several msec to several tens of msec, which is an extremely short repetition cycle.

Referring to FIG. 9, the 4WD ECU 34 obtains the engine speed ne from the engine speed sensor 86 in step 1, the throttle opening th from the throttle sensor 84 in step 2, and the vehicle speed v from the wheel speed sensor 80 in step 3. Subsequently, in step 4, the 4WD ECU 34 determines the total gear ratio itotal based on, for example, the shift portion sp detected by the shift position sensor 82. In step 5 that corresponds to the output torque calculating portion 100, the engine torque te is obtained from the engine speed ne obtained in step 1 and the throttle opening th obtained in step 2. Next, in step 6 that corresponds to the partial clutch engagement detecting portion 104, whether the clutch 14 is fully engaged is determined based on the engine speed ne obtained in step 1 and the vehicle speed v obtained in step 3. If "YES" in step 6, the clutch transmitting torque tc is determined as being equal to the engine torque te obtained in step 5. If "NO" in step 6, the 4WD ECU 34 proceeds to step 8 corresponding to the inertial loss torque calculating portion 102 and obtains the engine angular velocity $d\omega/dt$ from the engine speed ne obtained in step 1 and calculates an estimated value of the inertial loss torque tl by multiplying the engine angular velocity $d\omega/dt$ with the engine inertial moment I. Next, in step 9, the clutch transmitting torque tc is obtained from the engine torque te obtained in step 5 and the inertial loss torque tl obtained in step 8 (See the relationship (2) indicated above). In step 10 that corresponds to the total driving power calculating portion 108, a theoretical value of the total driving power tin indicating the torque transmitted via the propeller shaft 24 is obtained from the total gear ratio itotal obtained in step 4 and the clutch transmitting torque tc obtained in step 7 or 9 (See the relationship (3) indicated above). Subsequently, in step 11, the rotation speed of the propeller shaft 24 (i.e., input rotation speed) is calculated from the transmission ratio y determined based on the engine speed ne obtained in step 1 and the shift position sp detected by the shift position sensor 82, and the rotation speed of the output shaft 66 (i.e., output rotation speed) is calculated from the vehicle speed v obtained in step 3, and the difference between the rotation speed of the propeller shaft 24 and the rotation speed of the output shaft 66 is determined as the differential speed dn. In step 12, the driving power distribution value tout is calculated from the torque distribution ratio KST and the total driving power tin obtained in step 10 (see the relationship (4) indicated above). In step 13 that corresponds to the power distribution control portion 112, the torque transmitted via the electromagnetic coupling 26 is controlled by controlling the current supplied to the electromagnetic solenoid 62 according to the driving power distribution value tout obtained in step 12. In this control routine, step 7 and step 9 correspond to the clutch transmitting torque calculating portion 106.

As described above, the 4WD ECU 34 includes the output torque calculating portion 100 that calculates the engine torque te output from the engine 12, i.e., a driving power source (step 5), the inertial loss torque calculating portion 102 that calculates the inertial loss torque tl of the engine 12 (step 8), the partial clutch engagement detecting portion 104 that determines whether the clutch 14 is partially engaged (step 6), and the clutch transmitting torque calculating portion 106 that, when the clutch 14 is partially engaged, calculates the clutch transmitting torque tc of the clutch 14 based on the engine torque te calculated by the output torque calculating portion 100 and the inertial loss torque tl calculated by the inertial loss torque calculating portion 102 (step 7 and step 9). Thus, the 4WD ECU 34 factors in the inertial loss torque tl when calculating the clutch transmitting torque tc, which enables to accurately detect the clutch transmitting torque tc regardless of the engagement state of the clutch 14. Namely, it is possible to accurately detect the clutch transmitting torque tc even when the clutch 14 is partially engaged.

Besides, in the above-described embodiment, when the partial clutch engagement detecting portion 104 determines that the clutch 14 is partially engaged, the clutch transmitting torque calculating portion 106 determines the difference between the engine torque te calculated by the output torque calculating portion 100 and the inertial loss torque tl calculated by the internal loss torque calculating portion 102 as the clutch transmitting torque tc transmitted via the clutch 14. Thus, the aforementioned accurate detection of the clutch transmitting torque tc during partial engagement of the clutch 14 may be accomplished by such a simple detection procedure.

While the invention has been described with reference to the exemplary embodiment thereof, it is to be understood that the invention is not limited to the embodiment. To the contrary, the invention is intended to cover various modifications and equivalent arrangements other than described above.

For example, while the clutch 14 is a hydraulically driven clutch that is operated by the driver to allow or interrupt transmission of the engine torque te from the engine 12 in the above-described embodiment, the clutch 14 may alternatively be an electromagnetic clutch or a magnetic-particle clutch that is engaged and disengaged electromagnetically, for example.

Furthermore, while the clutch transmitting torque calculating portion 106, in the above-described embodiment, determines the difference between the output torque te of the engine 12 and the inertial loss torque tl of the engine 12 as the clutch transmitting torque tc when the clutch 14 is partially engaged, this relationship is exemplary and various other relationships may instead be adopted to determine the transmitted torque tc based on the output torque te and the inertial loss torque tl.

Furthermore, while the electromagnetic coupling 26 is used in the above-described embodiment, a hydraulic coupling may instead be used. In this case, the power distribution control portion 112 may control the torque transmitted through the hydraulic coupling by controlling the current supplied to a linear solenoid valve provided in a hydraulic control circuit for supplying hydraulic pressure to the hydraulic coupling. Also, a magnetic-power type coupling may instead be used.

While the various elements are shown in various combinations and configurations, which are exemplary, other combinations and configurations, including more, less or only a single element, are also within the spirit and scope of the invention.

**Claims**

1. A transmitted torque detection system for a vehicle including a driving power source (12), a transmission (16), and a clutch (14) provided along a driving power transmission path (38, 40) between the driving power source (12) and the transmission (16), the clutch (14) being manually or automatically operated to allow or interrupt torque transmission from the driving power source (12) to the transmission (16), the transmitted torque detection system being **characterized by** comprising:

   output torque calculating means (100) for calculating an output torque (te) of the driving power source (12);
   inertial loss torque calculating means (102) for calculating an inertial loss torque (tl) of the driving power source (12);
   partial clutch engagement detecting means (104) for determining whether the clutch (14) is partially engaged; and
   clutch transmitting torque detecting means (106) for calculating a torque (tc) transmitted by the clutch (14) based on the output torque (te) calculated by the output torque calculating means (100) and the inertial loss torque (tl) calculated by the internal loss torque calculating means (102) when the clutch partial engagement detecting means (104) determines that the clutch (14) is partially engaged.

2. A transmitted torque detection system according to claim 1, wherein
   the clutch transmitting torque detecting means (106) calculates a difference between the output torque (te) calculated by the output torque calculating means (100) and the inertial loss torque (tl) calculated by the internal loss torque calculating means (102) as the torque (tc) transmitted by the clutch (14) when the clutch partial engagement detecting means (104) determines that the clutch (14) is partially engaged.

3. A method for detecting a torque transmitted by a clutch (14) provided along a driving power transmission path (38, 40) between a driving power source (12) and a transmission (16) in a vehicle, the method being **characterized by** comprising:

calculating an output torque (te) of the driving power source (12);
calculating an inertial loss torque (tl) of the driving power source (12);
determining whether the clutch (14) is partially engaged; and
calculating the torque (tc) transmitted by the clutch (14) based on the calculated output torque (te) and the calculated inertial loss torque (tl) when the clutch (14) is partially engaged.

4. A method according to claim 3, wherein
   the torque (tc) transmitted by the clutch is calculated as a difference between the calculated output torque (te) and the calculated inertial loss torque (tl) when the clutch (14) is partially engaged.

# FIG.1

WHEEL SPEED SENSOR — 80

SHIFT POSITION SENSOR — 82

THROTTLE SENSOR — 84

ENGINE SPEED SENSOR — 86

FRONTREAR G SENSOR — 88

4WD ECU

E/G

# F I G . 2

# FIG.3

# F I G . 4

# F I G . 5

THROTTLE
SENSOR
84

100
OUTPUT TORQUE
CALCULATING
PORTION

ENGINE
SPEED
SENSOR
86

102
INERTIAL
LOSS TORQUE
CALCULATING
PORTION

106
CLUTCH TRANSMITTING
TORQUE CALCULATING
PORTION

104
PARTIAL CLUTCH
ENGAGEMENT
DETECTING
PORTION

WHEEL
SPEED
SENSOR
80

108
TOTAL DRIVING
POWER CALCULATING
PORTION

110
POWER DISTRIBUTION
COMMAND GENERATING
PORTION

112
POWER DISTRIBUTION
CONTROLLING
PORTION

26

13

# F I G . 6

(TORQUE INPUT
FROM ENGINE)

(TORQUE OUTPUT
FROM CLUTCH)

ENGINE TORQUE

CLUTCH
TRANSMITTING
TORQUE

te

$tc = te - I \cdot \dot{\omega}$

ENGINE INERTIA

ENGINE INERTIAL
LOSS TORQUE

$I \cdot \dot{\omega}$

ENGINE
INERTIAL
MOMENT

ROTATIONAL
ANGULAR
VELOCITY

EP 1 580 463 A2

# F I G . 7

ENGAGEMENT STARTS

ENGAGEMENT COMPLETES

ne(Nin)

tc

te

0

0

$I \cdot \dot{\omega}$

t1

t2

TIME

# F I G . 8

TORQUE

ENGINE TORQUE te

CLUTCH TRANSMITTING
TORQUE
(ACTUAL VALUE)

CLUTCH TRANSMITTING
TORQUE
(ESTIMATED VALUE)
$tc = te - I \cdot \dot{\omega}$

CLUTCH PARTIALLY ←→ CLUTCH FULLY            TIME
ENGAGED              ENGAGED

FIG.9

START

OBTAIN ENGINE SPEED :ne — S1

OBTAIN THROTTLE OPENING :th — S2

OBTAIN VEHICLE SPEED :v — S3

CALCULATE TOTAL GEAR RATIO :itotal — S4

CALCULATE ENGINE TORQUE :te — S5

S6 — CLUTCH IS FULLY ENGAGED?

NO

S8 — CALCULATE INERTIAL LOSS TORQUE :tl

S7 — CALCULATED CLUTCH TRANSMISSION TORQUE :tc = te

YES

S9 — CALCULATE CLUTCH TRANSMITTING TORQUE : tc = te − tl

S10 — CALCULATE TOTAL DRIVING POWER :tin

S11 — CALCULATE DIFFERENTIAL SPEED :dn

S12 — CALCULATE DRIVING POWER DISTRIBUTION VALUE :tout

S13 — WHEEL DRIVE CONTROL

RETURN